Europäisches Patentamt

European Patent Office

Office européen des brevets

(19)

(11) EP 0 416 833 B1

(12) EUROPEAN PATENT SPECIFICATION

(45) Date of publication and mention
of the grant of the patent:
**05.01.2000   Bulletin 2000/01**

(51) Int Cl.⁷: **H04N 1/46**, H04N 1/417

(21) Application number: **90309597.4**

(22) Date of filing: **03.09.1990**

(54) **Color image encoding**

Farbbildkodierung

Codage d'images en couleurs

(84) Designated Contracting States:
**AT BE CH DE DK ES FR GB GR IT LI LU NL SE**

(30) Priority: **05.09.1989   JP   23071489**
**05.09.1989   JP   23071589**
**05.09.1989   JP   23071689**
**12.06.1990   JP   15468890**

(43) Date of publication of application:
**13.03.1991   Bulletin 1991/11**

(73) Proprietor: **CANON KABUSHIKI KAISHA**
**Tokyo (JP)**

(72) Inventors:
• **Hirabayashi, Yasuji,**
**c/o Canon Kabushiki Kaisha**
**Tokyo (JP)**
• **Ohsawa, Hidefumi, c/o Canon Kabushiki Kaisha**
**Tokyo (JP)**
• **Yoshida, Tadashi, c/o Canon Kabushiki Kaisha**
**Tokyo (JP)**

(74) Representative:
**Beresford, Keith Denis Lewis et al**
**BERESFORD & Co.**
**High Holborn**
**2-5 Warwick Court**
**London WC1R 5DJ (GB)**

(56) References cited:
**EP-A- 0 395 394          GB-A- 2 189 966**

• **IEEE TRANSACTIONS ON COMMUNICATIONS.
vol. COM 32, no. 11, November 1984, NEW YORK
US pages 1201 - 1209; YAMAGUCHI: 'Efficient
encoding of colored pictures in R, G, B
components'**
• **IEEE TRANSACTIONS ON COMMUNICATIONS.
vol. 29, no. 6, June 1981, pages 858-867;
LANGDON et al.: "Compression of Black-White
Images with Arithmetic Coding"**

**Description**

The present invention relates to the color image encoding of color facsimile etc. for communication of color image.

For the conventional image encoding method, run length encoding system represented by G3, G4 facsimile recommended by CCITT (Consultative Council of International Telephone and Telegraph) has been generally used. The said encoding system is the system wherein the length of continuation (run length) of white or black pixels is counted and in reference to the predetermined code table, the code corresponding to the counted value is determined. The encoding table used here is so characterized that a relatively short code is allotted to the long white run which often appears in the case of document image.

On the other hand, low cost color printers have been developed in recent years and an image communication system by binary color having 1 bit data for each of red (R), green (G), blue (B) or yellow (Y), cyan (C) and magenta (M) has been introduced.

As one of such binary color encoding systems, they have developed the system to do encoding for each of the 3-color bit planes and use MH and MMR encoding method for black & white picture.

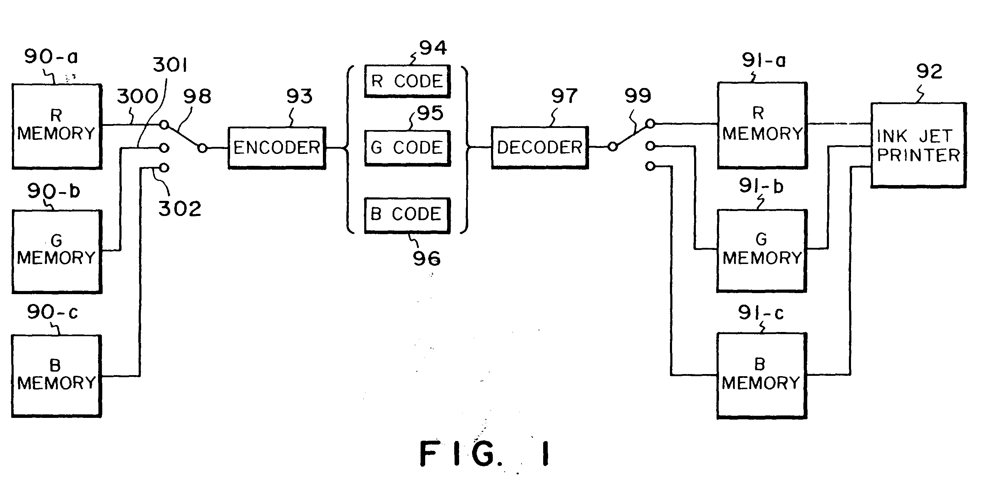

Fig. 1 is an example of image transmission device to conduct encoding for each 3-color bit plane. In the buffer memories 90-a, b and c are stored color by color the R, G and B color signals binarized by color image reading device not shown in the figure.

First the R signal 300 is input into the encoder 93 from R buffer memory 90-a through selector 98. At the encoder 93, MH and MMR coding etc. are applied and R code 94 is generated. This R code 94 is decoded at decoder 97 and via the selector 99 it is input into R buffer memory 91-a. When encoding of R signal is over, G signal 301 is output from G buffer memory 90-b in the same way and then through the similar encode processing, G code 95 is generated and through the similar decoding processing, decoded data are memorized in G buffer memory 91-b. In the same way, B code 96 is produced by B signal coming from B buffer memory 90-c and it is encoded and memorized in B buffer memory 91-c.

At printer 92, all data are accumulated in buffer memory 91-a, b and c and thereafter each color data are output and recorded. Or alternatively, it may be so arranged that after accumulating all the data in buffer memory 91-a and 91-b, B signal obtained by decoding of B code is first recorded at printer 92 and then color data of 91-a and 91-b are recorded.

However when such method as to encode each of 3-color bit plane, the code of each color is independently produced. Therefore even for the printer having the construction which enables simultaneous recording of three colors like ink jet printer, it is necessary that the decoding device is equipped with the buffer memory corresponding to the full size of three or two colors.

Besides recording can be started only after decoding of 3- or 2-color image data are completed and it presents the problem of the lack of promptness in data transmission.

Individual encoding of R, G and B bit plane also increases the entropy of the original R, G, B data source and as the result encoding efficiency deteriorates. To put it in another way, it does not utilize the correlation data of colors.

Another problem is that when the statistical character of the black & white run length of the image is different from that of the image which has been used as the standard at the time of preparation of code table, for example when a semi-intermediate tone image is transmitted, on-off of color dot is frequently repeated, and as the result the amount of codes may finally exceed the original data.

It also presents such problem to the encoding efficiency that at the encoding of the image where black & white image is mixed into color image, R, G and B has the same value and therefore even for the black & white image which can be expressed in monocolor, encoding must be made for each of R, G and B bit plane.

In other words, with the system to encode color image in 3 bits, when

(1) input manuscript is only in a few colors out of 8 available colors such as white, black and red or white, blue and green, or
(2) the printer at the signal receiving side can express only a few colors out of eight colors,

the system encodes even unnecessary color data and thus data condensation becomes insufficient.

The present invention has been made in the light of the above problems and has as a concern the provision of a color image signal encoding method which can efficiently encode color image signals.

In accordance with the present invention there is provided a method of encoding a plurality of color component signals as set out in claim 1.

In order that the present invention may be more readily understood, embodiments thereof will now be described and with reference to the accompanying drawings, in which:-

Fig. 1 is a block diagram of a known transmission system for bit plane encoding;
Fig. 2 is a block diagram of a first embodiment of the present invention;
Fig. 3 is a more detailed block diagram of the embodiment of Figure 2;
Fig. 4 is a block diagram of the encoder of Figure 3;
Fig. 5 is a block diagram of the renewal circuit shown in Figure 4;
Fig. 6 is a block diagram of the status prediction circuit of Figure 3;
Figs. 7(a) to 7(c) show reference pixels;
Fig. 8 is a drawing illustrating an encoding efficiency curve;
Fig. 9 is a block diagram of an arithmetic encoder;
Fig. 10 is a block diagram of a prediction conversion circuit;
Fig. 11 is a block diagram of a second embodiment of the present invention;
Fig. 12 shows another status prediction circuit;
Figs. 13(a) to 13(c) are the drawings showing the reference pixels used in the embodiment of Fig. 11;
Fig. 14 is a block diagram of a third embodiment of the present invention;
Fig. 15 is a block diagram of the status prediction circuit of the embodiment of Figure 14;
Fig. 16 shows the reference pixels used for encoding in the embodiment of Fig. 14;
Fig. 17 is a block diagram of a fourth embodiment of the present invention;
Figs. 18(a) to 18(c) are drawings showing reference pixels used for encoding in the embodiment of Fig. 17;
Fig. 19 is a block diagram of a fifth embodiment of the present invention

FIRST EMBODIMENT

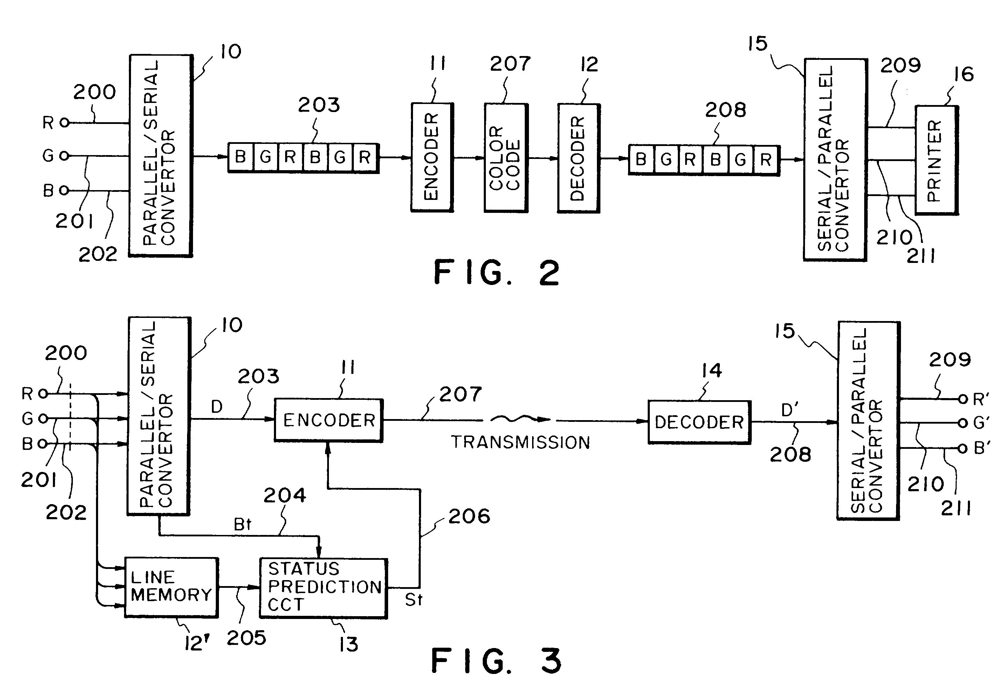

Referring now to Fig. 2, parallel data 200 - 202 of 1 bit each of R, G and B which represent each pixel of the color image signal entered at color image reading unit etc. are converted into the dot sequential serial signal 203 in the order of R, G and B for each pixel, by the parallel/serial converter 10. This order is not limited to R, G and B as long as it is matched at the transmission and reception sides, for example, it may be in the order of G, B and R.

Serial signal 203 given out at parallel/serial converter 10 is transmitted to an encoder 11 where a color code 207 for each color is generated based on an encoding condition corresponding to each color which is transmitted to a decoder 12 via a transmission line, memory device, etc.

Decoder 12 decodes the code 207 to supply a decoded RGB serial signal 208 to a serial/parallel converter 15 in which the serial RBG signal is converted into parallel R, G and B signals 209, 210 and 211 each of one bit of R, G and B which are transmitted to a binary color printer 16 e.g. an ink jet printer, etc. Thus a color image is reproduced and recorded on a recording material.

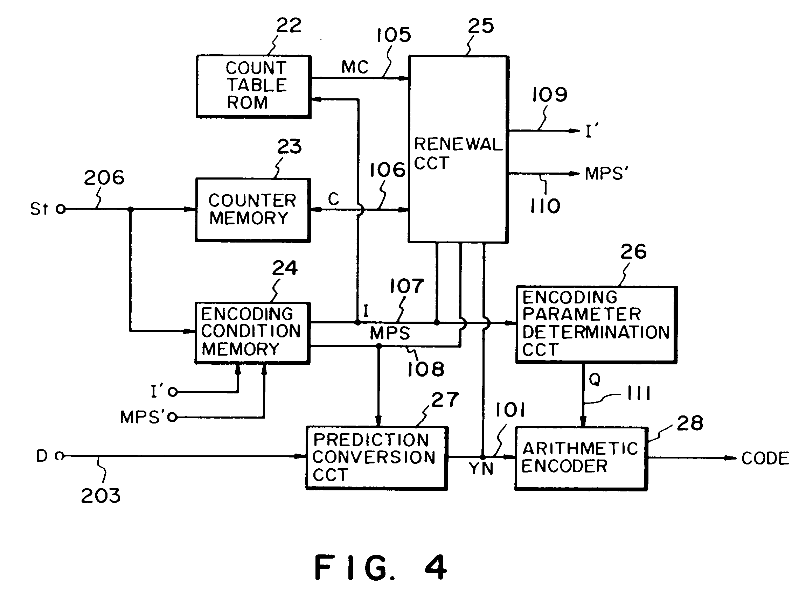

Fig. 3 is an embodiment of a color image transmission system which embodies the concept shown in Fig. 2.

Input data 200 - 202 of each 1 bit of R, G and B which represent each pixel of a color image are converted into a dot sequential RGB serial signal by parallel/serial converter 10. Serial signal D203 given out by the parallel/serial converter 10 is transmitted to the encoder 11.

Input R, G and B data 200 - 202 are also stored in a line memory 12' having a capacity of more than one line and which data correspond to the pixel positions to be referred to for status prediction. The output signal 205 of the line memory 12' is output to a status prediction circuit 13 for determination of encoding conditions. At the status prediction circuit 13, the status of each pixel to be encoded is determined in response to the output signal from the line memory 12' so as to output a status signal St 206 which indicates the status of encoding.

At encoder 11, serial signal D203 is encoded in a manner based on status signal St 206 by, for example, an arithmetic code as will be described hereinafter with reference to Figure 4. The coded signal 207 output by encoder 11 is transmitted to decoder 14 via the transmission line.

Decoder 14 decodes received signal 207 and outputs a decoded signal D' 208 which is in the order of RGB for each pixel. This serial signal D' is reconstituted to binary color data of 1 bit each of R', G' and B' at serial/parallel converter 15 and based on such color data, a color image is displayed and recorded.

There will now be explained the case where dot sequential image data are transmitted for each pixel as R, G and B signals.

At the encoding of the R signal which is the first color component signal, the G signal and the B signal of the pixel to be encoded are not known yet and therefore it is undecided whether the color of the said pixel is W (white), R (red), G (green), B (blue), Y (yellow), M (magenta), C (cyan) or Bk (black). In other words, when encoding is done color bv color, at the time of encoding of the 1st color component, the status of the other color components are unknown.

Whereas at the encoding of G signal which is the second color component signal, if reference is made to the R data of the same pixel already encoded, the color of the pixel to be encoded is known to be either in the (W, R, Y, M) group (when R=1) or the (Bk, G, B, C) group (when R=0) and it becomes easier to predict the value of G.

If binary data R, G of the same pixel already encoded is referred to at the encoding of the third signal or B signal, the color of the pixel is known to be in either one of four groups, namely, (W, Y) group (when R=G=1), (R, M) group (R=1, G=0), (G, C) group (R=0, G=1) or (Bk, B) group (R=G=0) and thus prediction of the value of B becomes even easier. As shown above, by adding color data to the data obtained from spatial correlation, the rate of agreement of prediction is increased and encoding efficiency is improved. According to the present embodiment, optimum encoding can be executed for various kinds of images through the employment of a color image encoding system wherein encoding is done in adaptation to the said image signal as stated later.

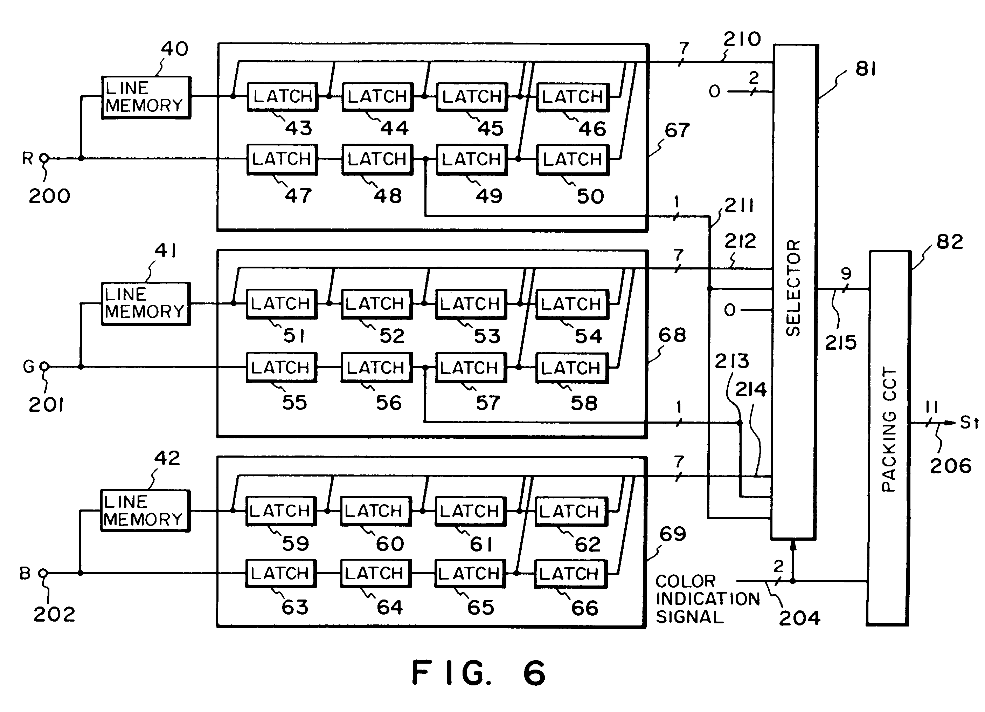

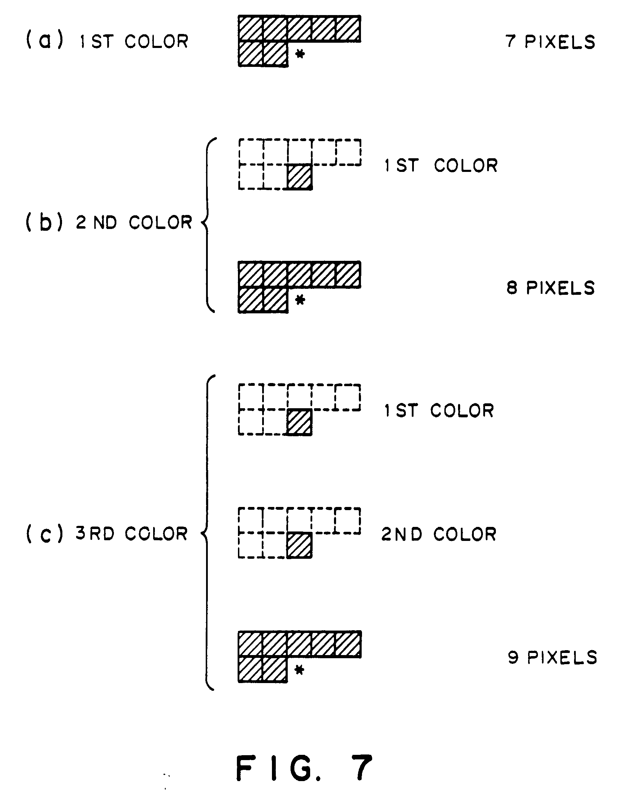

Fig. 6 is a circuit block diagram of line memory 12 and the status prediction circuit 13 shown in Fig. 3, while Fig. 7 shows the position of pixels classified by color which is referred to for status prediction.

Fig. 7(a) indicates the reference pixels used to encode the first color component (R in the case of the present embodiment) and it shows that reference is made to the first color component of the 7 pixels already encoded adjacent the pixel to be encoded which is indicated by *.

Fig. 7(b) indicates the reference pixels used to encode the second color component (G in the case of the present embodiment) and shows that reference is made to 8 pixels, namely, the second color component of the same 7 pixels as those of Fig. 7(a) and the already encoded first color component for the pixel to be encoded.

Fig. 7(c) indicates the reference pixels used to encode the third color component (B in the case of the present embodiment) and shows that reference is made to 9 pixel data, namely the third color component of the same 7 pixels as those of Fig. 7(a) and the already encoded first and second color components of the pixel to be encoded.

As stated above, in the present embodiment, it is so arranged that encoding conditions are more properly set by utilizing the correlation between colors for each color of the same pixel.

In the composition shown in Fig. 6, the status of each color is determined by referring to a plural number of reference pixels as shown in Figs. 7(a) - 7(c). Hereunder is explained the operation of the arrangement shown in Fig. 6.

RGB data 200 - 202 are input into the latch groups 67 - 69 and, at the same time, into line memories 40, 41 and 42. The line memories 40 - 42 hold the RGB data delayed by one line. Latches 43 - 50, latches 51 - 58 and latches 59 - 66 hold the data delayed by every one pixel clock.

At latch group 67, by the output of line memory 40 and that of the latches 43, 44, 45 and 46 to which the output of line memory 40 is input, the data of 5 pixels on the line preceding the line to be encoded are made available for reference. By the output of latches 49 and 50, two pixels already encoded on the encoding line are made available for reference. The data of these 7 pixels are combined to form the reference pixel signal 210 used for determination of the status of R which is the 1st color to be encoded. Latch 48 outputs the encoded data 211 of R at the current encoding position for determination of the status for the other colors G and B.

Latch groups 68 and 69 having the same composition as that of latch group 67 are provided for data G 201 and B 202 and these latch groups 68 and 69 also output the data of 7 pixels in a manner similar to latch group 67 as reference pixel signals 212 and 214.

Latch 56 in the latch group 68 outputs the encoded data 213 of G at the current encoding position for determination of the status of B.

Color indication 2-bit signal 204 which indicates the color corresponding to the output of color data of RGB given out by parallel/serial converter is input into selector 81. Selector 81 changes over the reference pixel signal according to the color indication signal 204. That is, when color indication signal 204 indicates R, the selector selects the reference pixel signal 210 and 2 bits of zero signal. When the color indication signal 204 indicates G, it selects reference pixel signal 212, R signal 211 and 1 bit of zero signal. When signal 204 indicates B, it selects reference pixel signal 214, R signal 211 and G signal 213. The thus obtained 9-bit selection signal 215 and 2-bit color indication signal 204 are combined into an 11-bit signal by the packing circuit 82 to become the status signal St 206. Therefore the status signal St 206 indicates the color of the pixel to be encoded and the status of the surrounding pixels and indicates $2^7$, $2^8$ and $2^9$ kinds of status for each color of R, G and B, respectively.

Fig. 4 is a block diagram of encoder 11 shown by Fig. 3.

Before going into the explanation of Fig. 4, explanation shall be made on an arithmetic code used in the present embodiment.

As already known, arithmetic encoding is a method of forming the code by arithmetic operation in sucn way that an input signal series shall become a code expressed by a fractional binary number. This method has been published in the literature by Langdon and Rissanen et al entitled "Compression of Black/White Images with Arithmetic Coding" IEEE Trans. Com. COM-29, 6, June 1981, pp. 856-867. According to this literature, when an already encoded input signal series S is represented by a code C(S), the probability at which the less probable symbol (LPS) is expected is represented by q, an operation register augend is represented by A(S) and the content of a code register is represented by C(S), the following arithmetic operation is executed for each input signal:

$$A(S1) = A(S) \times q \simeq A(S) \times 2^{-Q} \tag{1}$$

$$A(S0) = <A(S) - A(S1)> \ell \qquad (2)$$

$< > \ell$ indicates rounding at $\ell$ bit of effective digits

$$C(S0) = C(S) \qquad (3)$$

$$C(S1) = C(S) + A(S0) \qquad (4)$$

Here, when encoded data are the more probable symbol (MPS: 0 in the above case), A(S0) and C(S0) are used for encoding of the succeeding data. When the encoded data are the less probable symbol (LPS: 1 in the above case), A(S1) and C(S1) are used for encoding of the succeeding data.

The new A value is multiplied by $2^S$ (S is an integer number larger than 0) and set in between $0.5 \leq A < 1.0$. This processing corresponds to S times shifting the contents of operation register A in regard to hardware. The same number of shiftings is made for code register C and the signal shifted out becomes the code. Code formation is made by repeating the above processing.

As shown in equation (1), by approximating the appearance probability q of LPS by the power of 2 ($2^{-Q}$: Q is a positive integer number), multiplication is replaced by shift operation. To improve this approximation, q is approximated by the polynomial expression of the power of 2 as shown in equation (5). By such approximation, the worst point of efficiency is improved:

$$q \simeq 2^{-Q1} + 2^{-Q2} \qquad (5)$$

As for arithmetic encoding the value of Q may be changed for each encoded data and therefore the probability estimation section can be separated from the encoding section.

In the present embodiment, a dynamic method of estimating the probability while conducting encoding is employed as stated above.

Next, an explanation shall be made of the block diagram of encoder 11 of Fig. 4 which executes arithmetic encoding.

Status signal St 206 coming from status prediction circuit 13 is input into the counter-memory 23 and encoding condition memory 24.

At the encoding condition memory 24 are memorized the more probable symbol MPS 108 which is the symbol more probably given and index I 107 which indicates the encoding conditions containing the appearance probability of LPS of the arithmetic code to be stated later, for each of $2^7$, $2^8$ and $2^9$ kinds of status of each color of R, G and B, respectively. MPS 108 which is read out of encoding condition memory 24 according to the color and status of the image data D 203 to be encoded as indicated by status signal St 206 is input into prediction conversion circuit 27. The prediction conversion circuit 27 produces a signal YN 101 which becomes zero when serial signal D 203 agrees with MPS 108. YN signal 101 is input into renewal circuit 25. At the renewal circuit 25, when the YN signal is 0, one of the count values memorised in counter memory 23, corresponding to the status signal at St 206 is incremented. When the count value C 106 memorized in the counter memory 23 agrees with the set value MC 105 coming from count-table ROM 22, renewal of I and MPS is made in the direction where index I 107 becomes larger (in the direction where appearance probability q of LPS becomes smaller). Inversion of MPS is not executed.

Count table ROM 22 supplies the renewal circuit 25 with the set value MC 105, the number of MPS indicated in Table 1 (shown further below) which is determined in correspondence to index I expressed by appearance probability q of the LPS.

At the renewal circuit 25, when MPS108 does not agree with pixel signal 203, i.e., when the YN signal from prediction conversion circuit 27 is 1, renewal is made in the direction where index I 107 becomes smaller (in the direction where appearance probability q of LPS becomes larger). If the YN signal is 1 is given when index I 107 is 1, processing is made to invert the MPS ($0 \rightarrow 1$ or $1 \rightarrow 0$). Outputs I' 109 and MPS' 110 of renewal circuit 25 are the values of index and the more probable symbol, respectively, after renewal and they are re-memorized in the encoding condition memory 24 corresponding to the status indicated by the status signal St 206.

At the encoding parameter determination circuit 26, encoding parameter Q 111 of arithmetic code is set for the arithmetic encoder 28 based on the value of index I 107. At this arithmetic encoder 28, YN signal 101 coming from prediction conversion circuit 27 is converted into arithmetic code using parameter Q 111 to obtain the code 102.

By providing an initial value to the encoding condition memory 24 and not renewing MPS, static encoding is realized easily.

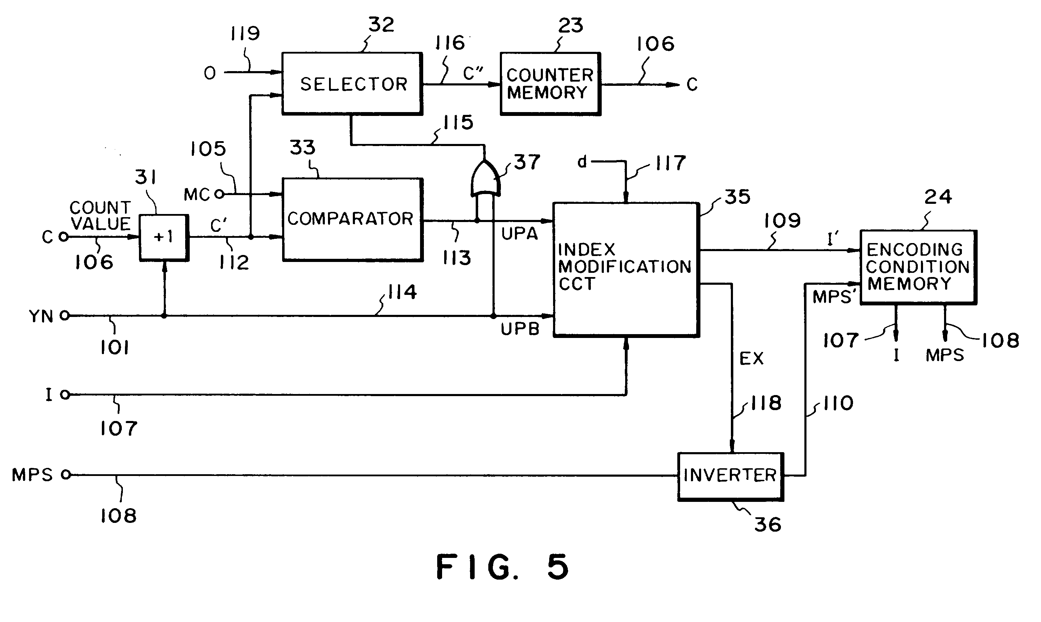

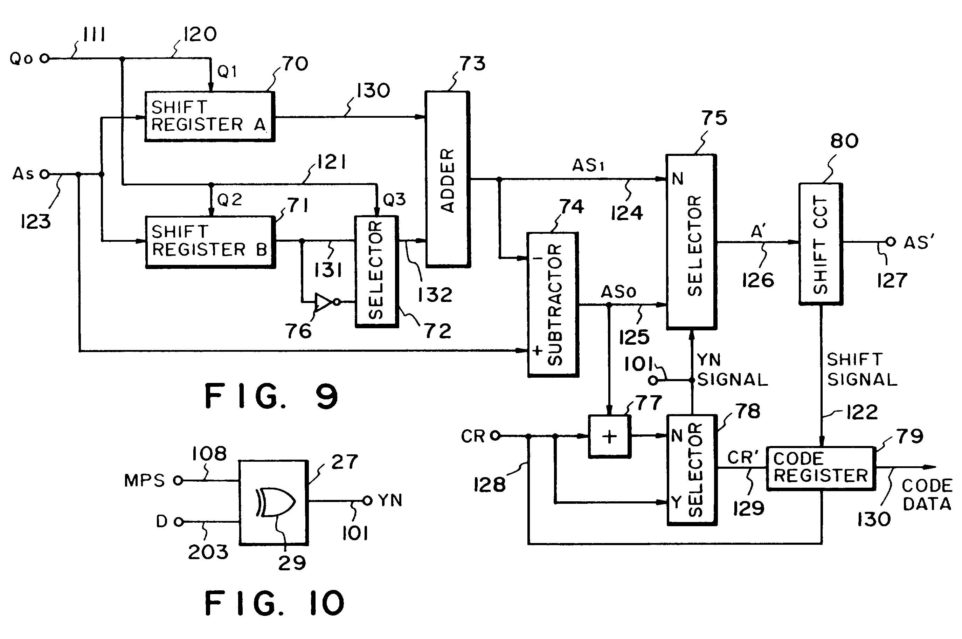

Fig. 10 is the block diagram of prediction conversion circuit 27. Serial signals D 203 and MPS 108 are input into the EX-OR circuit 29 and according to the logical formula of Table 2 (shown further below), YN signal 101 becomes 0 when serial signal D 203 agrees with MPS 108 and becomes 1 when they disagree. Fig. 5 is the block diagram of renewal circuit 25. When YN signal 101 is 0, count value C 106 coming from counter memory 23 in accordance with the status signal St 206 is incremented by +1 by the adder 31 to become the signal C' 112.

This value is compared with MC 105 coming from count table ROM 22 at comparator 33 and when the value of C' agrees with the value of MC, renewal signal UPA 113 is set to 1. YN signal 101 becomes the renewal signal UPB 114 while UPA and UPB enter the index modification circuit 35. Logic OR is applied to UPA and UPB at OR circuit 37 and the output signal 115 of OR circuit 37 becomes the changeover signal of selector 32. At selector 32, when the signal 115 is 1, it selects a zero signal 119 to reset the value of counter memory 23 and, otherwise, it selects output signal C' 112 of adder 31 and it is output as the counter renewal signal C" 116 and counter memory 23 memorizes it in correspondence with the status indicated by the status signal St 206. Therefore when serial signal D 203 does not agree with MPS 108 and when the agreement status continues for a preset time, the count value of counter memory 23 is reset.

At the index modification circuit 35 are inputted the present index I 107 under control of the signal d 117 (d=1 in standard case) which controls the renewal pitch of the index, UPA 113, UPB 114 and the encoding condition memory 24.

Table 3 (shown further below) is a table which indicates the method of renewal of the index at the index modification circuit 35 (Table 3 represents the cases when the renewal pitch is d=1 and d=2). By referring to this table for the present index I, renewal pitch condition d, UPA and UPB, the renewed index I' is determined. When I=1 and UPB=1 (when serial signal D 203 disagrees with MPS 108), EX signal 118 is set to 1. When EX signal 118 is 1, the symbol of the present MPS 108 is inverted (0→1 or 1→0) to obtain the renewal MPS' 110. When EX signal 118 is 0, MPS' is not modified. Thus renewed I' 109 and MPS' 110 are memorized in encoding condition memory 24 in correspondence with the status indicated by status signal St 206 and they are used as the index I and MPS for the succeeding processing. The method of renewal shown in Table 3 may be composed of the table by using ROM etc. or of logics using adder-subtractor means.

As aforesaid, when MPS for the amount corresponding to the number of MPS determined by the value of index I is generated, which expresses the appearance probability q of LPS approximated by a polynomial of the power of 2, the value of d (renewal pitch signal 117) is added to index I to reduce the appearance probability q of LPS used as arithmetic code, whereas when LPS is generated the value of d is subtracted from index I to enlarge the appearance probability q of LPS used for arithmetic code. When LPS is generated under a status where the appearance probability q of LPS represents 0.5 (the status where index I is 1), MPS is inverted.

As aforesaid, by renewing index I and MPS in adaptation to the input image, arithmetic encoding with excellent encoding efficiency is realized.

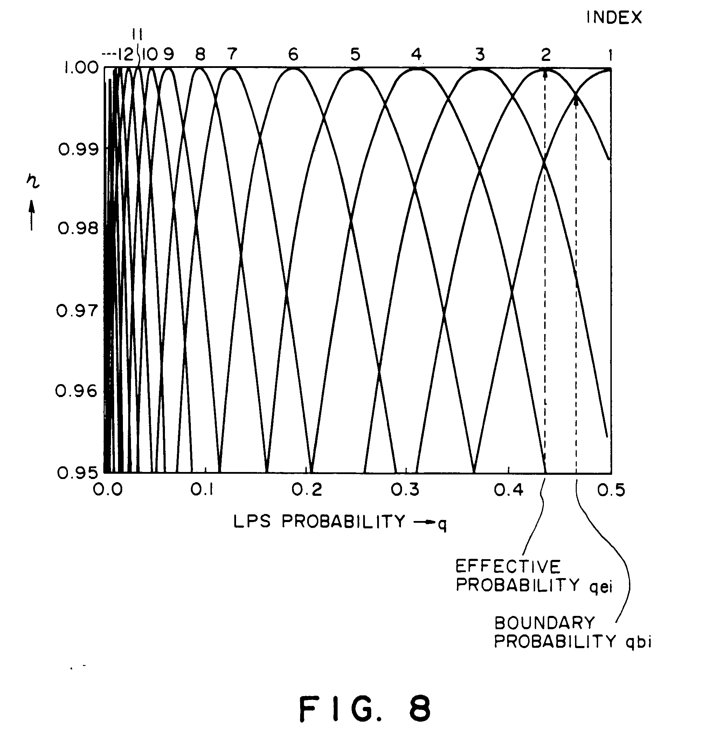

Fig. 8 shows the encoding efficiency curve of arithmetic code used in the present embodiment. whereafter, the value of index I is shown by small letter i. Said curve is represented by the formula (6) when the appearance probability of LPS is represented by q and the approximated probability at encoding time is represented by $q_{ei}$. Index I is sequentially given from 1, 2, 3 .... from the side where appearance probability q of LPS is larger toward the side where it is smaller.

$$\eta = \frac{-q \log_2 q-(1-q) \log_2(1-q)}{-q \log_2 q_{ei}-(1-q) \log_2 (1-q_{ei})} \tag{6}$$

Here the numerator is entropy and $q_{ei}$ is the value represented by equation (7).

$$q_{ei} = q_1 + q_2 \tag{7}$$

The values of $q_1$ and $q_2$ are the polynomial approximation values expressed by powers of 2 and they are given by Table 4 (see further below). For example, they are defined by equations (8) - (10) below,

$$q_{e1}' = 2^{-1} \tag{8}$$

$$q_{e2}' = 2^{-1} - 2^{-4} \tag{9}$$

$$q_{e3}' = 2^{-2} + 2^{-3} \tag{10}$$

The peak point probability $q_{ei}$ at which efficiency $\eta$ becomes 1.0 shall be called hereafter effective probability. The crossing of the efficiency curves is called boundary probability $q_{bi}$ and it is evident that beyond this probability, the efficiency is better if encoding is executed using the adjacent effective probability.

In the present example of practice, effective probability $q_{ei}$ shown in Table 4 is selected from the probabilities which may be approximated by two terms as shown in equation (5). $Q_1$, $Q_2$ and $Q_3$ of Table 4 are the parameters $Q_c$ 111 to be transmitted to arithmetic encoder 28 (Figs. 4,9). That is, $Q_1$ and $Q_2$ represent the shift volume to be given to shift registers and by such shift operation, power of 2 calculation is performed. $Q_3$ shows the coefficient at the second term and it makes the +, - changeover.

The value of MC in Table 1 is determined in the following way.

When the number of LPS is $N_L$ and the number of MPS is $N_M$, probability of generation of the LPS is given by equation (11).

$$q = \frac{N_L}{N_M + N_L} \tag{11}$$

When this equation is solved by $N_M$, equation (12) is given.

$$N_M = [N_L(1/q-1)] \tag{12}$$

Here, [ ] expresses the raising of the numbers below decimal point. By substituting q in equation (12) by $q_{bi}$ shown in Fig. 8, the number $N_{Mi}$ of the more probable symbol (MPS) is calculated. Therefore MC can be calculated from equation (13):

$$MCi = N_{Mi+1} - N_{Mi} \tag{13}$$

The values of MC in Table 1 have been calculated from equations (11), (12) and (13) assuming $N_L$=2.

As aforesaid, the number $N_{Mi}$ of the more probable symbol MPS corresponding to each index I is obtained based on each boundary probability $q_{bi}$ shown in Fig. 8 and the difference in the more probable symbol $N_M$ between the adjacent indices is deemed to be the MC for the respective index I.

The value of MC is compared with the number of the more probable symbol MPS generated as aforesaid and if the value of MC agrees with the number of continuous generation of the more probable symbol MPS, it is judged to be the status where encoding by the adjacent index I is suitable and index I is modified. Thus index I is modified by good timing based on the number of generation of the more probable symbol MPS and encoding by the optimum index I is achieved with good adaptation.

Fig. 9 is a block diagram of arithmetic encoder 28. Out of the control signal Q 111 (Table 4) determined by code parameter determination circuit 26, $Q_1$ is entered into the shift register A 70, $Q_2$ is entered into the shift register B 71 and $Q_3$ is entered into the selector 72. $Q_1$ and $Q_2$ indicate for how many bits the Augend signal $A_s$ 123 should be shifted to the right as against the shift registers A and B. The results of such shift are represented by output signals 130 and 131.

Inverter 76 provides the complement of signal 131 and selector 72 selects the output signal of signal 131 or inverter 76 by control signal $Q_3$ to obtain the output signal 132. At the adder 73, signal 130 coming from shift register A 70 and signal 132 from selector 72 are added and $A_{s1}$ signal 124 is given out. At the subtractor 74, $A_{s1}$ signal 124 is subtracted from $A_s$ signal 123 to obtain $A_{s0}$ signal 125. At selector 75, either $A_{s0}$ signal 125 or $A_{s1}$ signal 124 is selected according to YN signal 101. That is, when YN signal is 1, $A_{s0}$ signal is selected and when YN signal is 0, $A_{s1}$ signal becomes A' signal 126. At shift circuit 80, leftward shift processing is continued until MSB of A' signal 126 becomes 1 and by such shift, $A_s'$ signal 127 is obtained. Shift signal 122 corresponding to the frequency of such shift enters into the code register 79 and from code register 79, the number of bits corresponding to the shift frequency are output one after another at MSB to produce the code data 130.

Code data 130 are so processed by the bit processing method not indicated in the figure that the continuation of bit 1 shall be allowed up to certain limit and they are transmitted to decoder 14 side.

Content CR 128 of code register 79 is added to $A_{s0}$ signal 125 at the adder 77 and enters into selector 78. Signal CR 128 to which no $A_{s0}$ signal 125 has been added also enters into the selector 78 and it is output as CR' signal 129 which equals to CR when YN signal 101 is 1 and equals to CR + $A_{s0}$ when YN signal is zero. Shift processing stated above in regard to code register 79 is the processing done for CR' signal.

As aforesaid, according to the present embodiment, at the prediction encoding of color image signal expressed by plural number of color component signals, prediction is so carried out that the rate of agreement of prediction and encoding efficiency are improved by referring to the surrounding pixels of the same color and referring to the pixels of other colors at the pixel position to be encoded which have already been encoded.

In the present embodiment, input output composition by dot sequence is employed and therefore, this system is particularly effective for the cases where the data are output to the printer which performs printing in the order of RGB after decoding just like the case of an ink jet printer.

Explanation has been made in the above on encoding of 3-bit color signals of R, G and B but it may be easily expanded to 3-bit color signals of Y, M and C or to 4-bit color signals of Y, M, C and Bk.

It goes without saying that it may be applied not only to the transmission of color image signal such as color facsimile but also to encoding of color image signals for storage by an electronic filing system, etc.

As explained above it is possible to simplify the composition of encoding and decoding devices, speed up the reproduction of color images and thus efficiently encode the color image signals which are expressed with plural number of color component signals.

## SECOND EMBODIMENT

The embodiments explained above are those applied to the color signals input and output in dot-segmental order and the order of RGB for each pixel but a similar prediction is also possible for the signals input and output in plane-sequential order of RGB.

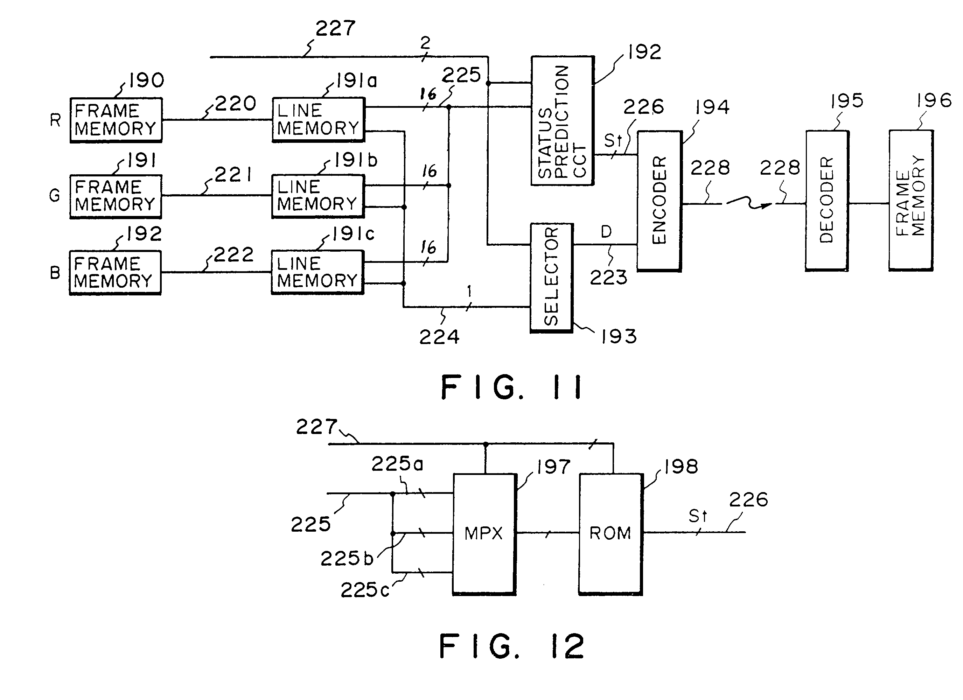

Referring now to Figure 11, in the embodiment shown in this figure it is possible to select a pixel at an arbitrary position of the preceding color plane, which has been already encoded as a reference pixel at the time of encoding of the pixels of a current plane when processing the color image data for each color plane.

It is also possible to utilize the correlation of colors on the same color plane by referring to a past pixel on the same plane (a pixel preceding the pixel under attention for encoding which exists on the same color plane, i.e., a pixel at a position already encoded on the color plane on which the pixel under attention exists) as a reference pixel at the time of encoding.

Further, by referring to a future pixel on the preceding color plane (a pixel at a later position than the pixel under attention i.e., a pixel at a position uncoded yet on the same color plane as that of the pixel under attention), it is also possible to make an even stronger color correlation.

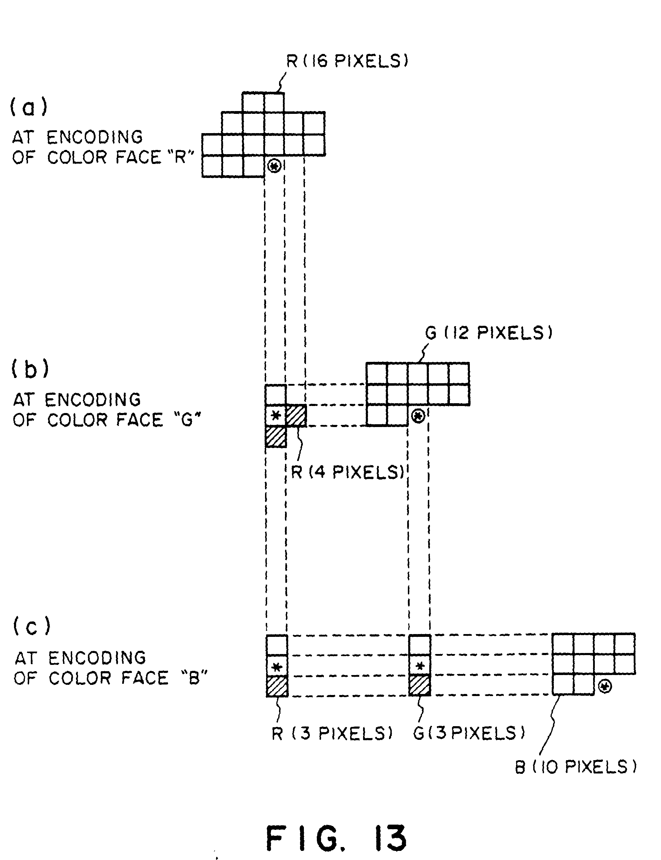

Fig. 13 shows an example of picking up a reference pixel in the Figure 11 embodiment. Fig. 13(a) shows the reference pixels at the time of encoding of the R plane. The mark * in the figure shows the pixel to be encoded and 16 pixels around it are referred to in encoding the pixel. Fig. 13(b) is the case of encoding of plane G. At the time of encoding of plane G, 4 pixels on the R plane and 12 pixels on the G plane are referred to. In the figure, * shows the other color data of the pixel to be encoded, while diagonal line pixels indicate the future pixels when viewed from the pixel to be encoded. Likewise, Fig. 13(c) shows the case of encoding of the B plane wherein 3 pixels on the R plane, 3 pixels on the G plane and 10 pixels on the B plane are referred to. The method of picking up reference pixels is not limited to this example but more pixels may be referred to and the relative positions of the reference pixels may also be freely selected.

The reason why the G plane and the B plane are not referred to in the case when, for example, encoding of the R plane is conducted at first is because the circumstances at the time of decoding are taken into account. In other words in the present embodiment, transmission and decoding are conducted in color plane sequence and therefore the data of the G and B planes which must be referred to at decoding of the R plane are not transmitted yet and consequently decoding is impossible.

Fig. 11 is a block diagram showing the composition of color image transmission system of the present embodiment. In Fig. 11, 190 - 192 are frame memories which store the binary image data of the respective picture planes of R, G and B. Frame memories 190 - 192 output the pixel data of R, G, B as parallel signals 220 - 222.

Parallel data 220 - 222 of each one bit of R, G and B which express each pixel of a color image are held in the line memories 191a - 191c which have the capacity to accommodate data of several lines (in the case of the present embodiment, 4 lines) and, together with the data of the line several lines preceding thereto, the stored data are delayed and output to the status prediction circuit 192 as 16-bit per color output signal 225. These line memories may be constructed in the same form as those of the first embodiment according to the pixels which have been selected for reference. Status prediction circuit 192 investigates the status of the pixel presently under attention according to the signal 225 from the line memories and color indication signal 227 indicating the color plane beinq processed and outputs the status signal St226 to the encoder 194.

On the other hand, line memories 191a - 191c each output 1-bit RGB data of the position of the pixel under attention for encoding at the selector 190 in the form of output signal 224. Upon receipt thereof, selector 193 transmits the 1-bit RGB data of the position and the color under attention to encoder 194 as signal D 223. At the encoder 194, code signal 228 is generated by an encoding method such as for example an arithmetic code such as a Markov code using the pixel signal D 223 and status signal St 226 as stated above and, through the transmission route, it is transmitted to decoder 195. At decoder 195, the code 228 is decoded and the results of such decoding are entered into the frame memory 196.

Fig. 12 is a block diagram of status prediction circuit 192. The reference pixels used here for determination of prediction status in this embodiment are shown in Fig. 13. In Fig. 12, pixel signal 225 (16 bits per color) for 3 colors around the position of pixel under attention having been provided by the line memories 191a - 191c of each plane R, G and B is output to multiplexer 197 together with 2-bit color indicating signal 227 which shows the plane being processed. Multiplexer 197 selects the reference pixels of the shape shown in Fig. 13 according to the color indicating signal 227 and enters them into ROM 198 together with the color indicating signal 227. ROM 198 generates the status code for the input status and outputs it as the status signal St 226.

In this embodiment, of plane-sequential encoding of a color image, it is possible to eliminate the drawbacks of the conventional run length encoding by using prediction encoding and further to suppress the increase of entropy by referring to other color planes having already been encoded at the prediction encoding and make a stronger color correlation by referring to future pixels of other color planes, such correlation being made possible by the plane-sequential processing. In other words, encoding efficiency is improved.

Especially in the present embodiment, encoding is conducted by the order of RGB for the color planes and therefore the range of other color pixels to be referred to is widened and thus it provides the effect that the value of YN signal 101 of a prediction exchange circuit of Fig. 3 is further optimized and encoding efficiency is substantially improved.

This is effective also in the case when printing is made by electronic photographic device or thermal transcription printer which prints out decoded data plane-sequentially.

THIRD EMBODIMENT

As explained above, by referring to other color signals at the encoding of a binary color signal, efficient encoding can be made utilizing color correlation, an increase in the amount of data is suppressed, and further by encoding the data by classifying the predicted status, it becomes possible to encode the binary color image efficiently.

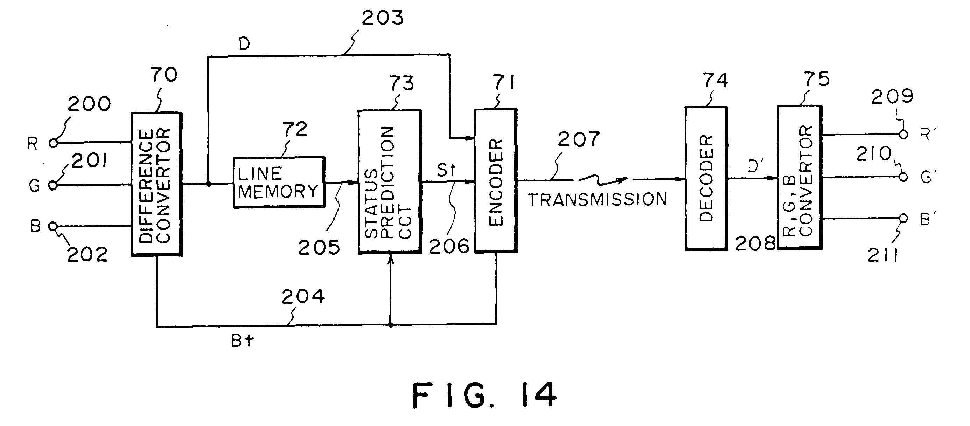

In the embodiments explained above, the input R, G, B signals of one bit each are encoded by dotsequence or by plane-sequence. However, with a black and white image, at least two of the RGB signals which express the black and white image often have the same value and therefore it is possible to improve encoding efficiency utilizing such characteristics. Accordingly reference will now be made to a third embodiment shown in Figure 14 of the accompanying drawings which is a block diagram of a color image transmission system using the correlation of R, G and B signals.

The parts common with those of Fig. 2 etc. are given common reference numbers. One-bit-each input data 200, 201 and 202 of R, G, B which express each pixel of color image are converted into the pixel signals $D_2$, $D_1$ and $D_3$ which are respectively composed of three differential data for each pixel by difference converter 70 as shown by the following formulas:

$$D_1 = G$$

$$D_2 = |\, G - R \,|$$

$$D_3 = |G - B|.$$

It means that the pixel signal $D_1$ is the G data itself while pixel signals $D_2$ and $D_3$ are respectively 1 if R data and B data are different from G data and 0 if they are same. The converted pixel signals $D_1$, $D_2$ and $D_3$ are plane-sequential in this order and they are encoded for example by using the aforesaid arithmetic code.

For encoding of the first plane G data 200 are output as it is from difference converter 70 as pixel signal $D_1$ and entered into line memory 72 and encoder 71 to be encoded. After completion of encoding of the first plane i.e.,

pixel signal $D_1$, the pixel signals $D_2$ and $D_3$ of the second and third planes transmitted from difference converter 70 are plane sequentially encoded.

Pixel signals $D_2$ and $D_3$ of the second and third planes that are encoded after encoding the bit plane of pixel signal $D_1$ of the first plane (G data) are binary data to show the difference between G data and R and B data respectively and therefore when the image has a strong color correlation, the values of pixel signals $D_2$ and $D_3$ of the second and third planes often indicate zero and therefore the amount of coding of such image is rather small. Especially as for black and white image, R, G and B become the same signal and consequently the encoding amounts of the bit planes of pixel signals $D_2$ and $D_3$ are practically zero and therefore this system is particularly useful for a color image etc. which contains black and white.

On the other hand line memory 72 has a capacity to accommodate the data of a plural number of lines and the status of the pixels surrounding the pixel to be encoded are output to status prediction circuit 72 as output signal 205.

At status prediction circuit 73, signal 2Q5 coming from the line memory 72 and the Bt signal 204 indicating which one of the bit planes is to be encoded of pixel signals D1, D2 or D3 determine the encoding status of each pixel to be encoded and output the status signal St 206.

Encoder 71 having a composition such as shown in Fig. 4 produces code signal 207 by encoding with the aforesaid arithmetic code such as Markov model code based on the pixel signal D 203 and status signal St 206 and the code 207 is transmitted to decoder 74 via the transmission line, etc.

At decoder 74, the transmitted code 207 is decoded and decoded pixel signals $D_1'$, $D_2'$ and $D_3'$ are stored in the frame memory in the decoder 74 and then the RGB converter 75 executes the calculation in reverse to that of the aforesaid difference converter 70 to return the signals into one bit binary color signals of R', G' and B' and, based on such data, the color image is displayed and recorded.

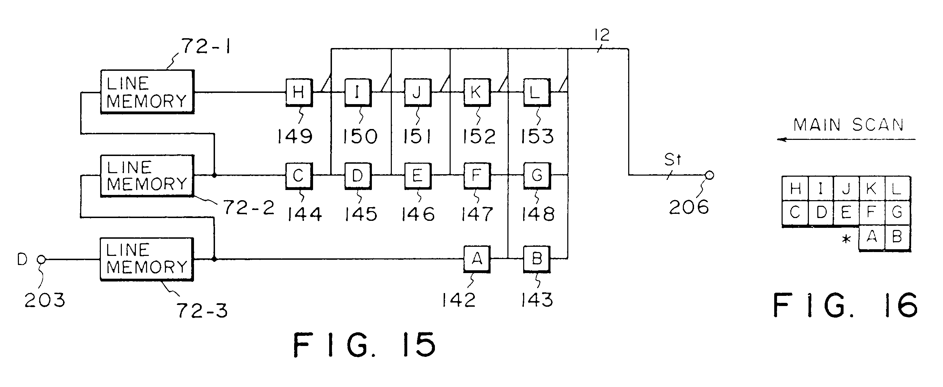

Fig. 15 is a block diagram of the status prediction circuit 73 shown in Fig. 14. The reference pixels used for prediction of the status are 12 pixels A - L shown in Fig. 16 and they are all 1 bit pixel data. The mark * indicates the position of the pixel under attention for encoding. In Fig. 15, 142 - 153 are 12 latches to memorize the pixels around the pixel under attention and latch A 142 holds the data of the pixel one pixel prior to the pixel to be encoded while latch B holds the data of the pixel two pixels prior. Likewise, latches C-G 144 - 148 hold the pixel data of 1 line prior and latches H-L 49 - 53 hold the pixel data of 2 lines prior to the pixel position to be encoded. The status of the data of these 12 pixels produces the status signal St 206 of 12 bit which is output to encoder 71. 72-1 - 72-3 are the line memories for obtaining the pixels surrounding the pixel under attention. Reference pixels however are not limited to 12 pixels, as stated above.

As aforesaid, status prediction circuit 73 transmits the status signal St 206 which indicates the status of the data of surrounding pixels to encoder 71. This status signal St 206 becomes the signal for prediction of pixel data for the pixel to be encoded by encoder 71.

In the present embodiment stated above, G data ($D_1$) of color image bit plane are encoded first as the first plane and then the difference signal ($D_2$) of R data and G data and difference signal ($D_3$) of B data and G data are sequentially encoded but it is possible to encode other data first. In the present embodiment, the differences between G data and R and B data were used but the same effect is obtained when another operation or logic is used.

The aforesaid system may be applied not only to R, G and B data but also to other color data such as Y, M and C data.

As explained above the present method increases the efficiency of binary color image encoding utilizing correlation between three original colors. To be more specific, in the encoding of three original color bit planes, after encoding the first plane, the second and third planes are encoded by calculation of the difference between the first plane and the second and third planes, thereby taking account of correlation of colors.

Besides, when a black & white image is encoded by this system, it is sufficient to use an amount of code required roughly for one original color plane. Even with a color image partially containing black & white image, encoding efficiency is much higher than conventionally.

FOURTH EMBODIMENT

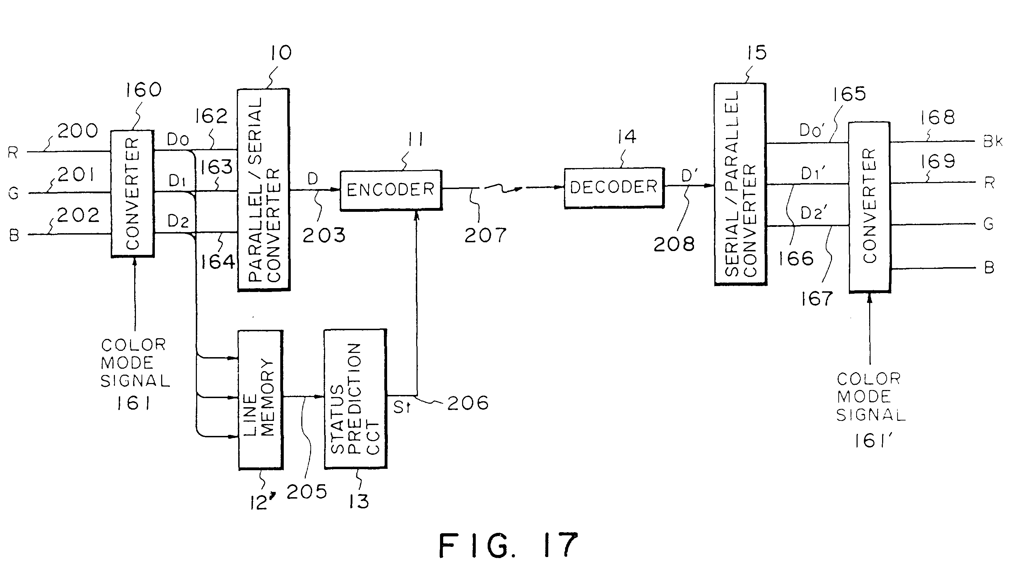

Reference is now made to a fourth embodiment of the present invention as shown in Figure 17.

In Fig. 17 the same block and signal lines as those indicated in Fig. 3 etc. are given the same numbers and their explanations are omitted here.

One-bit-each R, G and B input data 200 - 202 which express each pixel of a color image are signal-converted according to a color mode signal 161 at converter 160.

When the color mode is "3 bit colors" (in case of eight colors), R, G and B signals are directly connected to $D_0$ - $D_2$ signals. When the color mode is for example "three colors" (white, black and red), conversion is made at the converter 16 for white (111 → 110), black (000 → 000) and red (100 → 100) as shown in Table 5(a) shown further below. Thus all the lowest position bits become 0 and color discrimination is made only by the two upper bits. Here, however, 010 is undefined.

Since all the lowest position bits are zero, the amount of encoding of the lowest position bit plane is extremely small irrespective of the kind of encoding system and thus the amount is less than in the case when 3 bits are encoded as they are. In another example where color mode is "four colors" (white, black, green and blue), conversion is made for white (111 → 110), black (000 → 000), blue (001 → 010) and green (010 → 100) as shown in Table 5(b) shown further below and, as in the aforesaid example, all the lowest position bits become zero and color discrimination is made only by the upper 2 bits. In another example where the color mode is "two colors" (white and black), conversion is made for white (111 → 100) and black (000 → 000) as shown in Table 5(c) below and all two lower position bits become zero and color discrimination is made only by the upper most bit. Since all the two lower position bits become zero, the amount of encoding is less than the case when 3 bits are encoded as they are.

As shown above, by a slight modification wherein a data conversion circuit is added to a 3-bit color encoder, efficient encoding of color signals of 2 to 4 colors can be achieved.

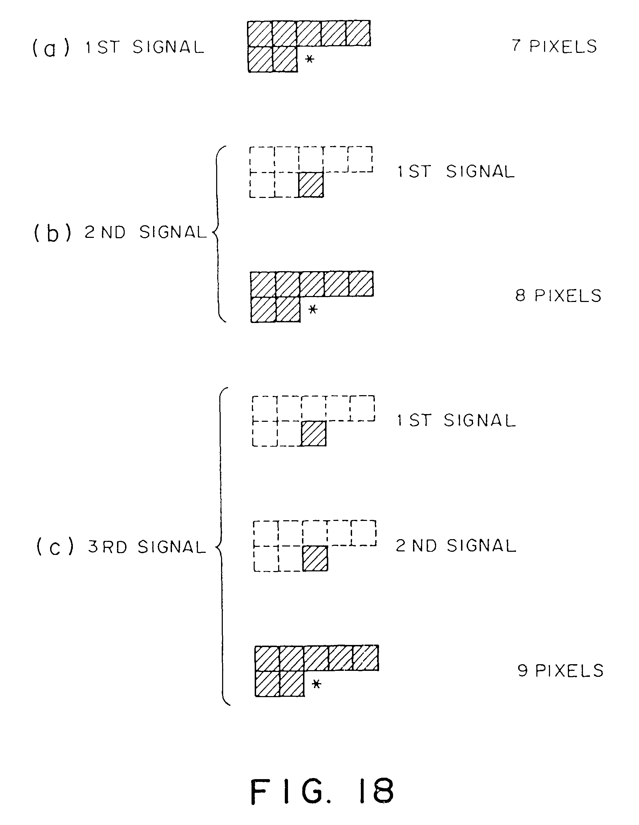

Color data signals $D_0$ - $D_2$ 212, 213 and 214 which have been converted as aforesaid by the converter 160 of Fig. 18 are further converted into serial signals by parallel/serial converter and the converted serial signal D203 is transmitted to the encoder 11.

On the other hand, color data 162, 163 and 164 are stored in the line memory 12' having the capacity for a plural number of lines and together with the data of the line several lines prior to the current line, they are input into status prediction circuit 13 as the output signal 205. At the status prediction circuit 13, the status of each pixel to be encoded is determined by the output signal 205 of line memory 12' and status signal St 206 which indicates the status of encoding and is output. At encoder 11, code 207 is formed by the encoding method in use, for example, arithmetic code based on the serial signal D 203 and status signal St 206 as stated above and it is transmitted to decoder 14. Encoder 11 can be of the same composition as that shown in Fig. 4.

At decoder 14, the transmitted code 207 is decoded to prepare decoded serial signal D' 208. Such signal D' 208 is reconverted to one-bit-each color data $D_0'$, $D_1'$ and $D_2'$ 165 - 167 by the serial/parallel converter 15. They are further converted into signals Bk 168, R 169, etc. for color recording under control of color mode signal 161' at another converter and transmitted to a color image display device not shown in the figure. Color mode signal 161' must be transmitted as header information prior the transmission of image data.

Fig. 18 is a drawing which explains the reference pixels used for determination of encoding state St 206.

Fig. 18(a) indicates the reference pixels used for encoding the first signal ($D_0$ 162 in the case of the present embodiment). It indicates that for the first signal seven pixels already encoded around the pixel to be encoded, which is indicated by *, are used for reference. Fig. 18(b) shows the reference pixels used for encoding the second signal ($D_1$ 201 in the case of the present embodiment). It indicates that for the second signal the seven pixels as used in Fig. 18(a) and the encoded first signal for the pixel at the same position as the pixel to be encoded (in total eight pixel data) are used for reference. Fig. 18(c) shows the reference pixels used for encoding the third signal ($D_2$ 164 in the case of the present embodiment). It indicates that for the third signal the seven pixels as used in Fig. 18(a) and the encoded first and second signals for the pixel at the same position as the pixel to be encoded, (in total nine pixel data) are used for reference.

As aforesaid, the present embodiment is so arranged that by utilizing the correlation between the signals of the same pixel, the encoding conditions can be properly set. These reference pixels can be obtained with the same circuit as that shown in Fig. 6.

FIFTH EMBODIMENT

The above explanations apply to the encoding of color signals to be input and output dot-sequentially, but the same prediction is possible also for the signal input and output plane-sequentially.

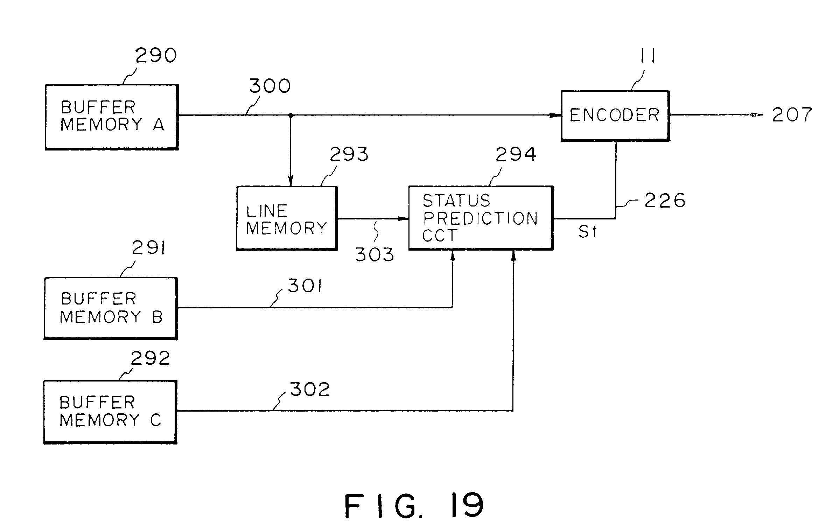

Fig. 19 shows a fifth embodiment of the present invention. Buffer memories 290, 291 and 292 memorize the color signals of all picture planes of $D_0$, $D_1$ and $D_2$. The signal to be encoded now is entered in the buffer memory 290. It is assumed that other signals which have been encoded are memorized in buffer memories 291 and 292.

Signal 300 coming from the buffer memory 290 is delivered to the encoder 11. It is also delayed by line memory 293 and together with a few other lines it is transmitted to status prediction circuit 294. Buffer memories 291 and 292 transmit the received signals 301 and 302 to the status prediction circuit 294. By these signals, status prediction signal St 206 is produced and transmitted to encoder 11. Then at encoder 11, code 207 is produced by image signal 300 and the St signal.

As explained further above, for a color image for which only n colors out of an m-bit color signal representing more than n colors are encoded, a color image having n colors can be efficiently encoded with this system without greatly modifying the hardware of an m-bit color image encoding system.

EP 0 416 833 B1

Table 1                    Table 2

| I | M C |
|---|-----|
| 1 | 2 |
| 2 | 1 |
| 3 | 1 |
| 4 | 1 |
| 5 | 2 |
| 6 | 4 |
| 7 | 5 |
| 8 | 8 |
| 9 | 1 1 |
| 1 0 | 1 5 |
| 1 1 | 2 2 |
| 1 2 | 3 0 |
| 1 3 | 4 3 |
| 1 4 | 6 1 |
| 1 5 | 8 7 |
| 1 6 | 1 2 0 |
| 1 7 | 1 7 4 |
| 1 8 | 2 4 1 |
| 1 9 | 3 4 8 |
| 2 0 | 4 8 3 |

| D | M P S | Y N |
|---|-------|-----|
| 0 | 0 | 0 |
| 0 | 1 | 1 |
| 1 | 0 | 1 |
| 1 | 1 | 0 |

12

Table 3

| I | UPA=UPB=0 | d = 1 | | | d = 2 | | |
|---|---|---|---|---|---|---|---|
| | | UPA=1 | UPB=1 | | UPA=1 | UPB=1 | |
| | I' | I' | I' | EX | I' | I' | EX |
| 1 | 1 | 2 | 1 | 1 | 3 | 1 | 1 |
| 2 | 2 | 3 | 1 | 0 | - | - | - |
| 3 | 3 | 4 | 2 | 0 | 5 | 1 | 0 |
| 4 | 4 | 5 | 3 | 0 | - | - | - |
| 5 | 5 | 6 | 4 | 0 | 7 | 3 | 0 |
| 6 | 6 | 7 | 5 | 0 | - | - | - |
| 7 | 7 | 8 | 6 | 0 | 9 | 5 | 0 |
| 8 | 8 | 9 | 7 | 0 | - | - | - |
| 9 | 9 | 10 | 8 | 0 | 11 | 7 | 0 |
| 10 | 10 | 11 | 9 | 0 | - | - | - |
| 11 | 11 | 12 | 10 | 0 | 13 | 9 | 0 |
| 12 | 12 | 13 | 11 | 0 | - | - | - |
| 13 | 13 | 14 | 12 | 0 | 15 | 11 | 0 |
| 14 | 14 | 15 | 13 | 0 | - | - | - |
| 15 | 15 | 16 | 14 | 0 | 17 | 13 | 0 |
| 16 | 16 | 17 | 15 | 0 | - | - | - |
| 17 | 17 | 18 | 16 | 0 | 19 | 15 | 0 |
| 18 | 18 | 19 | 17 | 0 | - | - | - |
| 19 | 19 | 20 | 18 | 0 | 21 | 17 | 0 |
| 20 | 20 | 21 | 19 | 0 | - | - | - |
| 21 | 21 | 21 | 20 | 0 | 21 | 19 | 0 |
| (-) indicates don't care. | | | | | | | |

Table 4

| I | Effective probability $q_e$ | Coefficient | | Encoding parameter | | |
|---|---|---|---|---|---|---|
| | | $q_1$ | $q_2$ | $Q_1$ | $Q_2$ | $Q_3$ |
| 1 | 0. 5000 | $2^{-2}$ | $2^{-2}$ | 2 | 2 | + |
| 2 | 0. 4375 | $2^{-1}$ | $-2^{-4}$ | -1 | 4 | - |
| 3 | 0. 3750 | $2^{-2}$ | $2^{-3}$ | 2 | 3 | + |
| 4 | 0. 3125 | $2^{-2}$ | $2^{-4}$ | 2 | 4 | + |
| 5 | 0. 2500 | $2^{-3}$ | $2^{-3}$ | 3 | 3 | + |
| 6 | 0. 1875 | $2^{-3}$ | $2^{-4}$ | 3 | 4 | + |
| 7 | 0. 1250 | $2^{-4}$ | $2^{-4}$ | 4 | 4 | + |
| 8 | 0. 0938 | $2^{-4}$ | $2^{-5}$ | 4 | 5 | + |
| 9 | 0. 0625 | $2^{-6}$ | $2^{-5}$ | 5 | 5 | + |
| 10 | 0. 0469 | $2^{-5}$ | $2^{-6}$ | 5 | 6 | + |
| 11 | 0. 0313 | $2^{-6}$ | $2^{-6}$ | 6 | 6 | + |
| 12 | 0. 0234 | $2^{-6}$ | $2^{-7}$ | 6 | 7 | + |
| 13 | 0. 0156 | $2^{-7}$ | $2^{-7}$ | 7 | 7 | + |
| 14 | 0. 0117 | $2^{-7}$ | $2^{-8}$ | 7 | 8 | + |

Table 4 (continued)

| I | Effective probability $q_e$ | Coefficient | | Encoding parameter | | |
|---|---|---|---|---|---|---|
| | | $q_1$ | $q_2$ | $Q_1$ | $Q_2$ | $Q_3$ |
| 15 | 0. 0078 | $2^{-8}$ | $2^{-8}$ | 8 | 8 | + |
| 16 | 0. 0059 | $2^{-8}$ | $2^{-9}$ | 8 | 9 | + |
| 17 | 0. 0039 | $2^{-9}$ | $2^{-9}$ | 9 | 9 | + |
| 18 | 0. 0029 | $2^{-9}$ | $2^{-10}$ | 9 | 10 | + |
| 19 | 0. 0020 | $2^{-10}$ | $2^{-10}$ | 10 | 10 | + |
| 20 | 0. 0015 | $2^{-10}$ | $2^{-11}$ | 10 | 11 | + |
| 21 | 0. 0010 | $2^{-11}$ | $2^{-11}$ | 11 | 11 | + |

Table 5

(a)

| Color | 3-bit input | $D_0$ $D_1$ $D_2$ after conversion |
|---|---|---|
| White | 1 1 1 | 1 1 0 |
| Black | 0 0 0 | 0 0 0 |
| Red | 1 0 0 | 1 0 0 |
| Undefined | | 0 1 0 |

(b)

| Color | 3-bit input | $D_0$ $D_1$ $D_2$ after conversion |
|---|---|---|
| White | 1 1 1 | 1 1 0 |
| Black | 0 0 0 | 0 0 0 |
| Red | 0 0 1 | 0 1 0 |
| Green | 0 1 0 | 1 0 0 |

(c)

| Color | 3-bit input | $D_0$ $D_1$ $D_2$ after conversion |
|---|---|---|
| White | 1 1 1 | 1 0 0 |
| Black | 0 0 0 | 0 0 0 |

**Claims**

1. A method of encoding a color image signal comprising a plurality of color component data for color components of each pixel of a color image, the method comprising the steps of:

   inputting color component data color sequentially;
   for a first input color component of a pixel of interest, selecting the first color component of pixels neighbouring the pixel of interest as first reference color component data;
   for each further sequentially input color component of the pixel of interest, selecting the further color component of pixels neighbouring the pixel of interest and each previously input color component data of at least the pixel of interest as further reference color component data, wherein the number of color components used as reference color component data increases sequentially in accordance with the color sequential input of color component data; and

prediction encoding the color component data for each of the first and further input color components of the pixel of interest using the first and further reference color component data respectively.

**2.** A method according to claim 1 wherein the color component data is input in color sequence for each pixel of interest.

**3.** A method according to claim 1 wherein the color component data is input in color sequence for all of the pixels of the color image.

**4.** A method according to any one of claims 1 to 3 including the step of providing an encoding condition parameter (I) for each status (St) of the first or further reference color component data; wherein in said encoding step the color component data for the pixel of interest is encoded using the provided encoding condition parameter corresponding to the status of the first or further reference color component data.

**5.** A method according to claim 1 or claim 2 including the initial step of obtaining the difference between a specific color component data and other color component data for the pixel of interest, wherein said specific color component data, and the differences between said specific color component data and said other color component data comprise said color component data for the pixel of interest used in the encoding method.

**6.** A method according to any one of claims 1 to 4 including an initial step of converting said color component data representing a plural number of color components for the pixel of interest into a lesser plural number of color component data representing a smaller number of color components for the pixel of interest in response to a color control signal, wherein said lesser plural number of color component data is used in the encoding method.

**7.** A method according to any preceding claim wherein said encoding step comprises encoding the color component data using an arithmetic code.

**8.** Encoding apparatus for encoding a color image signal comprising a plurality of color component data for color components of each pixel of a color image, the apparatus comprising:

input means (10;193;70) for inputting color component data color sequentially;

selecting means (12,13;192;73;294) for sequentially selecting, for a first input color component of a pixel of interest, the first color component of pixels neighbouring the pixel of interest as first reference color component data, and for each further sequential input color component of the pixel of interest, the further color component of pixels neighbouring the pixel of interest and each previously input color component data of at least the pixel of interest as further reference color component data, wherein the number of color components used as reference color component data increases sequentially in accordance with the color sequential input of color component data; and

prediction encoding means (28) for prediction encoding each of the first and further input color components of the pixel of interest using first a further reference color component data respectively.

**9.** Encoding apparatus according to claim 8 wherein the input means (10;193;70) is adapted to input the color component data in color sequence for each pixel of interest.

**10.** Encoding apparatus according to claim 8 wherein the input means (10;193;70) is adapted to input the color component data in color sequence for all of the pixels of the color image.

**11.** Encoding apparatus according any one of claims 8 to 10 including encoding condition memory means (24) for storing encoding condition parameters (I) for each status (St) of the first or further reference color component data; wherein said encoding means (28) is adapted to encode the color component data for the pixel of interest using the stored encoding condition parameters corresponding to the status of the first or further reference color component data.

**12.** Encoding apparatus according to claim 8 or claim 9 including difference means (70) for obtaining the difference between a specific color component and another color component for the pixel of interest, wherein the specific color component data, and the differences between the specific color component data and the other color component data are output to said input means (10;193;70), said selecting means (12,13;192;73;294) and said encoding means (28) to be used as color component data for the pixel of interest in the encoding.

13. Encoding apparatus according to any one of claims 10 to 11 including color converting means (160) for converting said color component data representing a plural number of color components for the pixel of interest into a lesser plural number of color component data representing a smaller number of color components for the pixel of interest in response to a color control signal, wherein said lesser plural number of color component data is output to said input means (10;193;70), said selecting means (12,13;192;73;294) and said encoding means (28) to be used as the plurality of color component data for the pixel of interest in the encoding.

14. Encoding apparatus according to any one of claims 8 to 13 wherein said encoding means (28) is adapted to encode the color component data using an arithmetic code.

**Patentansprüche**

1. Verfahren zum Codieren eines Farbbildsignals, das eine Vielzahl von Farbkomponentendaten für Farbkomponenten eines jeden Pixels eines Farbbildes enthält, mit den Verfahrensschritten:

   farbsequentielles Eingeben von Farbkomponentendaten;
   Auswählen für eine erste eingegebene Farbkomponente eines Gegenstandspixels der ersten Farbkomponente von dem Gegenstandspixel benachbarten Pixeln als erste Bezugsfarbkomponentendaten;
   Auswählen für jede weitere sequentiell eingegebene Farbkomponente des Gegenstandspixels der weiteren Farbkomponente von dem Gegenstandspixel benachbarten Pixeln und aller vorher eingegebenen Farbkomponentendaten wenigstens des Gegenstandspixels als weitere Bezugsfarbkomponentendaten, wobei sich die Anzahl von als Bezugsfarbkomponentendaten verwendeten Farbkomponenten sequentiell gemäß der sequentiell eingegebenen Farbe der Farbkomponentendaten erhöht; und
   Prädiktionscodieren der Farbkomponentendaten für jede der ersten und weiteren eingegebenen Farbkomponenten des Gegenstandspixels unter Verwendung der jeweiligen ersten und weiteren Bezugsfarbkomponentendaten.

2. Verfahren nach Anspruch 1, bei dem das Eingeben der Farbkomponentendaten in einer Farbsequenz für jedes Gegenstandspixel erfolgt.

3. Verfahren nach Anspruch 1, bei dem das Eingeben der Farbkomponentendaten in einer Farbsequenz für alle die Pixel des Farbbildes erfolgt.

4. Verfahren nach einem der Ansprüche 1 bis 3, mit dem Verfahrensschritt des Bereitstellens eines Codierzustandsparameters (I) für jeden Status (St) der ersten oder weiteren Bezugsfarbkomponentendaten; wobei das Codieren im Verfahrensschritt des Codierens der Farbkomponentendaten für das Gegenstandspixel unter Verwendung des bereitgestellten Codierzustandsparameters gemäß dem Status der ersten oder weiteren Bezugsfarbkomponentendaten erfolgt.

5. Verfahren nach Anspruch 1 oder 2, mit dem anfänglichen Verfahrensschritt des Bildens der Differenz zwischen speziellen Farbkomponentendaten und anderen Farbkomponentendaten für das Gegenstandspixel, wobei die speziellen Farbkomponentendaten und die Differenzen zwischen den speziellen Farbkomponentendaten und den anderen Farbkomponentendaten die Farbkomponentendaten für das im Codierverfahren verwendete Gegenstandspixel enthalten.

6. Verfahren nach einem der Ansprüche 1 bis 4, mit dem anfänglichen Verfahrensschritt des Umsetzens der Farbkomponentendaten, die eine Vielzahl von Farbkomponenten für das Gegenstandspixel darstellen, in eine geringere Vielzahl von Farbkomponentendaten, die eine geringere Anzahl von Farbkomponenten für das Gegenstandspixel als Reaktion auf ein Farbsteuersignal darstellen, wobei die geringere Vielzahl von Farbkomponentendaten im Codierverfahren Anwendung findet.

7. Verfahren nach einem der vorstehenden Ansprüche, bei dem der Verfahrensschritt des Codierens das Codieren der Farbkomponentendaten unter Verwendung eines arithmetischen Codes einschließt.

**8.** Codiergerät zum Codieren eines Farbbildsignals mit einer Vielzahl von Farbkomponentendaten für Farbkomponenten eines jeden Pixels eines Farbbildes, mit:

einem Eingabemittel (10; 193; 70) zur farbsequentiellen Eingabe von Farbkomponentendaten;
einem Auswahlmittel (12, 13; 192; 73; 294) zum sequentiellen Auswählen für eine erste eingegebene Farbkomponente eines Gegenstandspixels der ersten Farbkomponente von dem Gegenstandspixel benachbarten Pixeln als erste Bezugsfarbkomponentendaten und für jede weitere sequentiell eingegebene Farbkomponente des Gegenstandspixels der weiteren Farbkomponente von dem Gegenstandspixel benachbarten Pixeln und aller vorher eingegebenen Farbkomponentendaten wenigstens des Gegenstandspixels als weitere Bezugsfarbkomponentendaten, wobei sich die Anzahl von als Bezugsfarbkomponentendaten verwendeten Farbkomponenten sequentiell gemäß der sequentiell eingegebenen Farbe der Farbkomponentendaten erhöht; und mit einem Prädiktionscodiermittel (28) zur Prädiktionscodierung eines jeden der ersten und weiteren eingegebenen Farbkomponenten des Gegenstandspixels unter Verwendung der jeweiligen ersten und weiteren Bezugsfarbkomponentendaten.

**9.** Codiergerät nach Anspruch 8, dessen Eingabemittel (10; 193; 70) eingerichtet ist, die Farbkomponentendaten in einer Farbsequenz für jedes Gegenstandspixel einzugeben.

**10.** Codiergerät nach Anspruch 8, dessen Eingabemittel (10; 193; 70) eingerichtet ist, die Farbkomponentendaten in einer Farbsequenz für alle Pixel des Farbbildes einzugeben.

**11.** Codiergerät nach einem der Ansprüche 8 bis 10, mit einem Codierzustandsspeichermittel (24), das Codierzustandsparameter (I) für jeden Status (St) der ersten oder weiteren Bezugsfarbkomponentendaten speichert; wobei das Codiermittel (28) eingerichtet ist, die Farbkomponentendaten für das Gegenstandspixel unter Verwendung der gespeicherten Codierzustandsparameter gemäß dem Status der ersten oder weiteren Bezugsfarbkomponentendaten zu codieren.

**12.** Codiergerät nach Anspruch 8 oder 9, mit einem Differenzmittel (70) zur Differenzbildung zwischen einer speziellen Farbkomponente und einer weiteren Farbkomponente für das Gegenstandspixel, wobei die speziellen Farbkomponentendaten und die Differenzen zwischen den speziellen Farbkomponentendaten und den anderen Farbkomponentendaten an das Eingabemittel (10; 193; 70) abgegeben werden, wobei das Auswahlmittel (12, 13; 192; 73; 294) und das Codiermittel (28) beim Codieren als Farbkomponentendaten für das Gegenstandspixel zu verwenden sind.

**13.** Codiergerät nach einem der Ansprüche 10 bis 11, mit einem Farbumsetzmittel (160) zum Umsetzen der Farbkomponentendaten, die eine Vielzahl von Farbkomponenten für das Gegenstandspixel darstellen, in eine geringere Vielzahl von Farbkomponentendaten, die eine geringere Anzahl von Farbkomponenten für das Gegenstandspixel als Reaktion auf ein Farbsteuersignal darstellen, wobei die geringere Vielzahl von Farbkomponentendaten an das Eingabemittel (10; 193; 70) abgegeben wird, wobei das Auswahlmittel (12, 13; 192; 73; 294) und das Codiermittel (28) bei der Codierung als Vielzahl der Farbkomponentendaten für das Gegenstandspixel zu verwenden ist.

**14.** Codiergerät nach einem der Ansprüche 8 bis 13, dessen Codiermittel (28) eingerichtet ist, die Farbkomponentendaten unter Verwendung eines arithmetischen Codes zu codieren.

## Revendications

**1.** Procédé de codage d'un signal d'image en couleurs comprenant une pluralité de données de composantes de couleurs pour des composantes de couleurs de chaque pixel d'une image en couleurs, le procédé comprenant les étapes dans lesquelles :

on applique séquentiellement en entrée une couleur d'une donnée de composante de couleur ;
pour une première composante de couleur d'entrée d'un pixel auquel on s'intéresse, on sélectionne la première composante de couleur de pixels avoisinant le pixel auquel on s'intéresse en tant que première donnée de composante de couleur de référence ;
pour chaque autre composante de couleur du pixel auquel on s'intéresse, appliquée séquentiellement en entrée, on sélectionne l'autre composante de couleur de pixels voisins du pixel auquel on s'intéresse et chaque donnée de composante de couleur précédemment appliquée en entrée d'au moins le pixel auquel on s'intéresse en tant qu'autre donnée de composante de couleur de référence, le nombre de composantes de couleurs utilisées en tant que données de composantes de couleurs de référence augmentant séquentiellement en fonction de l'entrée séquentielle de couleur des données de composantes de couleurs ; et

on procède à un codage de prédiction des données de composantes de couleurs pour chacune des première et autres composantes de couleurs d'entrée du pixel auquel on s'intéresse en utilisant respectivement les première et autres données de composantes de couleurs de référence.

**2.** Procédé selon la revendication 1, dans lequel la donnée de composante de couleur est appliquée en entrée sous la forme d'une séquence de couleur pour chaque pixel auquel on s'intéresse.

**3.** Procédé selon la revendication 1, dans lequel la donnée de composante de couleurs est appliquée en entrée suivant une séquence de couleurs pour la totalité des pixels de l'image en couleurs.

**4.** Procédé selon l'une quelconque des revendications 1 à 3, comprenant l'étape consistant à fournir un paramètre (I) de condition de codage pour chaque état (St) de la première donnée ou d'une autre donnée de composante de couleur de référence ; dans lequel, dans ladite étape de codage, la donnée de composante de couleur pour le pixel auquel on s'intéresse est codée en utilisant le paramètre de condition de codage fourni correspondant à l'état de la première donnée ou d'une autre donnée de composante de couleur de référence.

**5.** Procédé selon la revendication 1 ou la revendication 2, comprenant l'étape initiale d'obtention de la différence entre une donnée de composante de couleur spécifique et une autre donnée de composante de couleur pour le pixel auquel on s'intéresse, dans lequel ladite donnée de composante de couleur spécifique et les différences entre ladite donnée de composante de couleur spécifique et ladite autre donnée de composante de couleur comprennent ladite donnée de composante de couleur pour le pixel auquel on s'intéresse utilisé dans le procédé de codage.

**6.** Procédé selon l'une quelconque des revendications 1 à 4, comprenant une étape initiale de conversion de ladite donnée de composante de couleur représentant un certain nombre de composantes de couleurs pour le pixel auquel on s'intéresse en un nombre inférieur de données de composantes de couleurs représentant un nombre plus petit de composantes de couleurs pour le pixel auquel on s'intéresse en réponse à un signal de commande de couleur, dans lequel ledit nombre inférieur de données de composantes de couleur est utilisé dans le procédé de codage.

**7.** Procédé selon l'une quelconque des revendications précédentes, dans lequel ladite étape de codage comprend le codage des données de composantes de couleurs en utilisant un code arithmétique.

**8.** Appareil de codage pour coder un signal d'image en couleurs comportant une pluralité de données de composantes de couleurs pour des composantes de couleurs de chaque pixel d'image en couleurs, l'appareil comportant :

un moyen d'entrée (10 ; 193 ; 70) pour l'entrée séquentielle de couleurs de données de composantes de couleurs ;

un moyen de sélection (12, 13 ; 192 ; 73 ; 294) pour sélectionner séquentiellement, pour une première composante de couleur d'entrée d'un pixel auquel on s'intéresse, la première composante de couleur de pixels voisins du pixel auquel on s'intéresse en tant que première donnée de composante de couleur de référence, et pour chaque autre composante de couleur d'entrée séquentielle du pixel auquel on s'intéresse, l'autre composante de couleur de pixels voisins du pixel auquel on s'intéresse et chaque donnée de composante de couleur d'entrée précédente d'au moins le pixel auquel on s'intéresse en tant qu'autre donnée de composante de couleur de référence, dans lequel le nombre de composantes de couleurs utilisées en tant que données de composantes de couleurs de référence augmente séquentiellement en fonction de l'entrée séquentielle de couleur de données de composantes de couleurs ; et

un moyen (28) de codage à prédiction pour un codage à prédiction de chacune des première et autres composantes de couleurs d'entrée du pixel auquel on s'intéresse en utilisant en premier une autre donnée de composante de couleur de référence, respectivement.

**9.** Appareil de codage selon la revendication 8, dans lequel le moyen d'entrée (10 ; 193 ; 70) est conçu pour l'entrée des données de composantes de couleurs suivant une séquence de couleurs pour chaque pixel auquel on s'intéresse.

**10.** Appareil de codage selon la revendication 8, dans lequel le moyen d'entrée (10 ; 193 ; 70) est conçu pour l'entrée des données de composantes de couleurs suivant une séquence de couleurs pour la totalité des pixels de l'image en couleurs.

**11.** Appareil de codage selon l'une quelconque des revendications 8 à 10, comprenant un moyen (24) à mémoire de condition de codage pour le stockage de paramètres (I) de condition de codage pour chaque état (St) de la première ou d'une autre donnée de composante de couleur de référence ; dans lequel ledit moyen de codage (28) est conçu pour coder la donnée de composante de couleur pour le pixel auquel on s'intéresse en utilisant les paramètres de condition de codage stockés correspondant à l'état de la première ou d'une autre donnée de composante de couleur de référence.

**12.** Appareil de codage selon la revendication 8 ou la revendication 9, comprenant un moyen à différence (70) destiné à obtenir la différence entre une composante de couleur spécifique et une autre composante de couleur pour le pixel auquel on s'intéresse, dans lequel la donnée de composante de couleur spécifique, et les différences entre la donnée de composante de couleur spécifique et les autres données de composantes de couleurs sont délivrées en sortie audit moyen d'entrée (10 ; 193 ; 70), audit moyen de sélection (12 ; 13 ; 192 ; 73 ; 294) et audit moyen de codage (28) pour être utilisées en tant que données de composantes de couleurs pour le pixel auquel on s'intéresse dans le codage.

**13.** Appareil de codage selon l'une quelconque des revendications 10 et 11, comprenant un moyen (160) de conversion de couleur destiné à convertir ladite donnée de composante de couleur représentant un certain nombre de composantes de couleurs pour le pixel auquel on s'intéresse en un nombre plus petit de données de composantes de couleurs représentant un nombre inférieur de composantes de couleurs pour le pixel auquel on s'intéresse en réponse à un signal de commande de couleur, dans lequel ledit nombre plus petit de données de composantes de couleurs est délivré en sortie audit moyen d'entrée (10 ; 193 ; 70), audit moyen de sélection (12, 13 ; 192 ; 73 ; 294) et audit moyen de codage (28) pour être utilisé en tant que pluralité de données de composantes de couleurs pour le pixel auquel on s'intéresse dans le codage.

**14.** Appareil de codage selon l'une quelconque des revendications 8 à 13, dans lequel ledit moyen de codage (28) est conçu pour coder les données de composantes de couleurs en utilisant un code arithmétique.

FIG. 1

EP 0 416 833 B1

FIG. 2

R ○ — 200
G ○ — 201
B ○ — 202

PARALLEL / SERIAL CONVERTOR — 10

[B][G][R][B][G][R] — 203

ENCODER — 11

COLOR CODE — 207

DECODER — 12

[B][G][R][B][G][R] — 208

SERIAL / PARALLEL CONVERTOR — 15

209
210
211

PRINTER — 16

FIG. 3

R ○ — 200
G ○ — 201
B ○ — 202

PARALLEL / SERIAL CONVERTOR — 10

D — 203

ENCODER — 11

TRANSMISSION — 207

DECODER — 14

D' — 208

SERIAL / PARALLEL CONVERTOR — 15

209
210
211

R'
G'
B'

LINE MEMORY — 12'

205

STATUS PREDICTION CCT — 13

Bt — 204

St — 206

22

**FIG. 4**

F I G. 5

FIG. 6

(a) 1ST COLOR          7 PIXELS

(b) 2ND COLOR          1ST COLOR

                              8 PIXELS

(c) 3RD COLOR          1ST COLOR

                              2ND COLOR

                              9 PIXELS

# F I G.  7

FIG. 8

EP 0 416 833 B1

# FIG. 9

```
Qo o———|111      120
                      |        Q1    70       130              73
                      |       ┌──────────────┐                ┌─────┐
                      |       │ SHIFT        │                │     │
                      |       │ REGISTER A   │                │  A  │
                      |       └──────────────┘                │  D  │        AS1          75
                      |                                        │  D  │                    ┌─────────┐
As o                  |            121          Q3            │  E  │   124     N        │    S    │
   |                  |       ┌──────────────┐  │            │  R  │                    │    E    │
123                   |    Q2 │ SHIFT        │  │            └─────┘                    │    L    │
                      |       │ REGISTER B   │  │             AS1                       │    E    │   A'        ┌──────┐
                      |       └──────────────┘  │                                       │    C    │            │ SHIFT│
                             131  │  ┌────────┐ 132    74                               │    T    │            │ CCT  │  o AS'
                             │     └──│SELECTOR│       ┌────────┐                        │    O    │  126       │  80  │
                          76 ▷       └────────┘       │   -    │                        │    R    │            └──────┘   127
                                      72              │ SUBTRAC│  ASo   125             └─────────┘
                                                      │  TOR   │                            N
                                                      │   +    │         YN                          SHIFT
                                                      └────────┘   101   SIGNAL                       SIGNAL
                                                                    o                                   122
                                                                         77      78
                                                              ┌───┐    ┌─────────┐          79
                                                   CR o───────│ + │──N │    S    │         ┌──────────┐
                                                              └───┘    │    E    │ CR'     │   CODE   │
                                                   128                 │    L    │         │ REGISTER │───o
                                                                     Y │    E    │         │    79    │   CODE
                                                                       │    C    │  129    └──────────┘   DATA
                                                                       │    T    │                         130
                                                                       │    O    │
                                                                       │    R    │
                                                                       └─────────┘
```

# FIG. 10

```
         108           27
MPS o─────────┐    ┌────────┐
              │    │        │        o YN
              │    │   29   │
  D o─────────┘    └────────┘        101
      203
```

FIG. 11

FIG. 12

(a)
AT ENCODING
OF COLOR FACE "R"

R(16 PIXELS)

(b)
AT ENCODING
OF COLOR FACE "G"

G (12 PIXELS)

R (4 PIXELS)

(c)
AT ENCODING
OF COLOR FACE "B"

R (3 PIXELS)    G(3 PIXELS)

B (10 PIXELS)

FIG. 13

30

EP 0 416 833 B1

FIG. 14

FIG. 15

FIG. 16

FIG. 17

EP 0 416 833 B1

(a) 1ST SIGNAL

7 PIXELS

(b) 2ND SIGNAL

1ST SIGNAL

8 PIXELS

(c) 3RD SIGNAL

1ST SIGNAL

2ND SIGNAL

9 PIXELS

FIG. 18

FIG. 19

207

11 ENCODER

226

St

294 STATUS PREDICTION CCT

303

293 LINE MEMORY

300

301

302

290 BUFFER MEMORY A

291 BUFFER MEMORY B

292 BUFFER MEMORY C